# EUROPÄISCHE PATENTSCHRIFT

(11) **EP 2 492 600 B1**
(45) Veröffentlichungstag und Bekanntmachung des Hinweises auf die Patenterteilung: **09.10.2013**
(21) Anmeldenummer: 11156245.0
(22) Anmeldetag: 28.02.2011
(51) Int. Cl.: F24D 5/08, F24D 12/02

(54) **Anordnung zum Beheizen eines Raumes**
Assembly for heating a room
Agencement de chauffage d'une pièce

(43) Veröffentlichungstag der Anmeldung: 29.08.2012
(73) Patentinhaber: GoGas Goch GmbH & Co, D-44265 Dortmund (DE)
(72) Erfinder: Schneider, Heiko, 58239 Schwerte (DE); Trimis, Dimosthenis, 90762 Fürth (DE)
(74) Vertreter: Zenz

(56) Entgegenhaltungen:
- EP-A1- 0 555 658
- WO-A2-2008/105913
- US-A- 4 216 762
- US-B1- 6 786 422

## Beschreibung

Die Erfindung richtet sich auf eine Anordnung zum Beheizen eines Raumes mit einem zur Wärmeabstrahlung dienenden und in dem zu beheizenden Raum angeordneten Strahlungsrohr. Ferner richtet sich die Erfindung auf ein Verfahren zum Beheizen eines Raumes, bei dem ein Heizmedium zur Erwärmung der Wandung eines in dem Raum angeordneten Strahlungsrohres zu diesem und durch dieses hindurch gefördert wird.

Zur Beheizung von großen Räumen, wie beispielsweise Industriehallen, Werkstätten oder Sporthallen, werden heutzutage Warmlufterzeuger oder Infrarotheizungen eingesetzt, die im Allgemeinen mit gasbetriebenen Brennern ausgestattet sind. Der Vorteil von Infrarotheizungen gegenüber Warmlufterzeugern liegt darin begründet, dass nicht wie bei Warmlufterzeugern die Luft innerhalb der Halle oder des Raumes erwärmt wird, sondern eine Erwärmung der angestrahlten Oberflächen von in dem Raum angeordneten Objekten stattfindet. Dadurch arbeiten Infrarotheizungen vergleichsweise ökonomisch und werden bevorzugt zur Beheizung von großen Räumen eingesetzt.

Als Infrarotheizung wird zum Beispiel ein sogenannter Dunkelstrahler verwendet, der unterhalb der Hallendecke montiert ist und der einen geschlossenen Brenner mit Strahlungsrohr aufweist. Durch die vom Brenner erzeugten Heißgase wird die Wandung des Strahlungsrohres erhitzt, das wiederum die Wärme überwiegend als Strahlung in den großen Raum abgibt, wohingegen die Heiß- bzw. Abgase des Brenners ins Freie geleitet werden. Zur Erhöhung der Energieeffizienz ist es bei einem solchen Dunkelstrahler bekannt, die im Abgas enthaltene Wärme zur Vorwärmung der Verbrennungsluft zu nutzen.

Der Erfindung liegt die Aufgabe zugrunde eine Lösung zu schaffen, mit der auf konstruktiv einfache Weise und kostengünstig die Energieeffizienz einer Anordnung und eines Verfahrens zum Beheizen eines Raumes verbessert wird. zweite Rohrleitung, die innerhalb eines Raumes im Bereich der Decke verläuft und als Strahlungsrohr ausgebildet ist.

Der Erfindung liegt die Aufgabe zugrunde eine Lösung zu schaffen, mit der auf konstruktiv einfache Weise und kostengünstig die Energieeffizienz einer Anordnung und eines Verfahrens zum Beheizen eines Raumes verbessert wird.

Diese Aufgabe wird erfindungsgemäß gelöst mit einer Anordnung zum Beheizen eines Raumes mit den Merkmalen gemäß dem Patentanspruch 1.

Die erfindungsgemäße Anordnung zum Beheizen eines Raumes umfasst ein zur Wärmeabstrahlung dienendes und in dem zu beheizenden Raum angeordnetes Strahlungsrohr und eine in den Raum zu dem Strahlungsrohr verlaufende Förderleitung, die ein die Wandung des Strahlungsrohres erwärmendes Heizmedium in das Strahlungsrohr fördert, wobei eine außerhalb des Raumes im Freien angeordnete Solaranlage das die Wandung des Strahlungsrohres erwärmende Heizmedium direkt oder indirekt erhitzt. Ein Brenner ist an einem Längsende des Strahlungsrohres angeordnet, der einen in das Strahlungsrohr mündenden Brennraum aufweist.

Ebenso wird die vorstehend genannte Aufgabe erfindungsgemäß gelöst durch ein Verfahren zum Beheizen eines Raumes mit den Merkmalen gemäß dem Patentanspruch 6.

Bei dem erfindungsgemäßen Verfahren zum Beheizen eines Raumes wird ein Heizmedium zur Erwärmung der Wandung eines in dem zu beheizenden Raum angeordneten Strahlungsrohres zu diesem und durch dieses hindurch gefördert, wobei das Heizmedium über eine Förderleitung zu dem Strahlungsrohr gefördert wird, und wobei das Heizmedium mit Hilfe einer außerhalb des Raumes im Freien angeordneten Solaranlage direkt oder indirekt erhitzt wird. Ein an einem Längsende des Strahlungsrohres angeordneter Brenner, der einen in das Strahlungsrohr mündenden Brennraum aufweist, wird nur dann in Betrieb genommen wird, wenn von dem Heizmedium, das mit Hilfe der Solaranlage direkt oder indirekt erhitzt wird, eine vorgegebene Heizleistung durch Wärmeabstrahlung des Strahlungsrohres nicht erreicht wird.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise und kostengünstig die Energieeffizienz zum Beheizen eines großen und hohen Raumes sowohl bei einer Anordnung als auch bei einem Verfahren verbessert und erhöht wird. Bei der Anordnung ist eine Heizvorrichtung nach Art einer Infrarotheizung bzw. eines Dunkelstrahlers mit einem Strahlungsrohr ausgebildet und steht mit einer im Freien angeordneten und Sonnen- bzw. Solarenergie in eine nutzbare Energieform umwandelnden Solaranlage derart in Wirkverbindung, dass entsprechend der Erfindung ein Heizmedium zur Erwärmung der Wandung des Strahlungsrohres von der Solaranlage auf direkte oder indirekte Weise erhitzt wird. Bei der direkten Weise wird das Heizmedium direkt von und innerhalb der im Freien angeordneten Solaranlage erhitzt und anschließend zur Erwärmung der Wandung des Strahlungsrohres in dieses über die Förderleitung geleitet. Demgegenüber besteht auch die Möglichkeit, dass die Sonnen- bzw. Solarenergie von der Solaranlage ausschließlich in eine Energieform umgewandelt wird, die zur Erhitzung des Heizmediums verwendet wird. Dadurch wird die von der Solaranlage aufgenommene Sonnenenergie zur indirekten Erhitzung des Heizmediums verwendet. Dementsprechend richtet sich die Erfindung auf ein solarbetriebenes Strahlungsrohr zur Raumbeheizung bzw. auf einen solarbetriebenen Dunkelstrahler. Damit das nach Art einer Infrarotheizung bzw. eines Dunkelstrahlers ausgebildete Strahlungsrohr auch dann betrieben werden kann, wenn nur wenig oder gar keine Sonnenenergie gewinnbringend zur Erhitzung des Heizmediums zur Verfügung steht, ist bei der erfindungsgemäßen Anordnung der Brenner an einem Längsende des Strahlungsrohres vorgesehen , der den in das Strahlungsrohr mündenden Brennraum aufweist. Damit kann das als Heizvorrichtung wirkende Strahlungsrohr nach Art eines herkömmlichen Dunkelstrahlers betrieben werden, ohne auf Sonnenenergie angewiesen zu sein. Bevorzugt ist es jedoch, dass die Anordnung die zur Erwärmung der Wandung des Strahlungsrohres benötigte Temperatur ausschließlich mit Solarstrahlung erreichen soll. Sollte allerdings die Solaranlage nicht mit der erforderlichen Intensität von Solar- bzw. Sonnenstrahlung beaufschlagt werden, so wird der Brenner in Betrieb gesetzt. Die Inbetriebnahme erfolgt zweckmäßigerweise nur in dem Maße, in dem über die einfallende Solarstrahlung hinaus noch ein Leistungs- bzw. Energiebedarf besteht, um die Wandung des Strahlungsrohres entsprechend der benötigten Raumtemperatur zu erhitzen.

In Ausgestaltung der erfindungsgemäßen Anordnung ist vorgesehen, dass die Solaranlage zumindest eine thermische Solaranlage umfasst und das von und innerhalb der zumindest einen thermischen Solaranlage direkt erhitzte Heizmedium über die Förderleitung in das Strahlungsrohr gelangt. Dabei kann die thermische Solaranlage beispielsweise eine Parabolrinne oder ein Röhrenkollektor sein, wobei mit Hilfe eines Reflektors das durch ein Absorberrohr strömende Heizmedium direkt von der Solaranlage erhitzt wird. In diesem Fall ist das Heizmedium vorzugsweise Luft oder ein gasförmiges und für eine Verbrennung geeignetes Fluid.

Zur indirekten Erhitzung sieht die Erfindung in alternativer Ausgestaltung der Anordnung vor, dass in der Förderleitung stromauf des Strahlungsrohres zumindest ein das Heizmedium erhitzender Wärmetauscher angeordnet ist, der mit der außerhalb des Raumes im Freien angeordneten und den zumindest einen Wärmetauscher zur Erhitzung des Heizmediums antreibenden Solaranlage in Wirkverbindung steht.

Dabei ist es im Hinblick auf eine energieeffizient arbeitende Anordnung auch bei indirekter Erhitzung des Heizmediums von Vorteil, wenn die Solaranlage zumindest eine thermische Solaranlage ist, die ein Heizfluid aufheizt, welches wiederum zur Aufheizung des durch den zumindest einen Wärmetauscher strömenden Heizmediums dient. Als thermische Solaranlagen kommen beispielsweise sogenannte Sonnenkollektoren oder auch Röhrenkollektoren in Betracht, bei denen die Wärme aus der Sonneneinstrahlung nutzbar gemacht und auf das Heizfluid übertragen wird. Besonders günstig ist es hierbei, wenn der zumindest eine Wärmetauscher mit der zumindest einen thermischen Solaranlage über eine Kreislaufleitung in Strömungsverbindung steht und das in der Kreislaufleitung geförderte Heizfluid ein Thermal-Öl ist. Das Thermal-Öl ersetzt bei Betriebstemperaturen von 140-310°C Wasser oder Dampf als Wärmeträgerfluid bzw. Heizfluid und ermöglicht einen Dauerbetrieb der Vorrichtung zum Beheizen eines Raumes. Der Wärmeaustausch im Wärmetauscher erfolgt auf indirekte Weise von dem solar erhitzten Heizfluid über eine wärmedurchlässige Wand des Wärmetauschers auf das Heizmedium. Dabei kann der Wärmetausch zwischen Heizfluid und Heizmedium nach dem Gegenstrom-, Gleichstrom- oder Kreuzstromprinzip erfolgen.

Alternativ zu einer thermischen Solaranlage kann eine Solaranlage zur Umwandlung von Sonnenenergie in elektrische Energie verwendet werden. Hierzu sieht die Erfindung in Ausgestaltung der Anordnung vor, dass der zumindest eine Wärmetauscher ein elektrisch betriebenes Heizregister ist und die Solaranlage zumindest eine Photovoltaikanlage ist, die das elektrisch betriebene Heizregister zur Erhitzung des Heizmediums mit elektrischer Energie versorgt. Dabei kann der Wärmetauscher beispielsweise als eine Widerstands- oder Induktionsheizung ausgebildet sein. Auf diese Weise wird das Heizmedium von der Solaranlage indirekt erhitzt.

Im Hinblick auf eine energieeffiziente Betriebsweise der erfindungsgemäßen Anordnung ist es weiter von Vorteil, wenn der Brenner nur dann in Betrieb ist, wenn die Heizleistung des Strahlungsrohres durch alleinige Erwärmung des von dem durch die Solaranlage angetriebenen Wärmetauschers erhitzten Heizmediums eine vorgegebene Heizleistung nicht erreicht. In diesem Zusammenhang ist es beispielsweise denkbar, dass mit Hilfe der Solaranlage ein Grundlastbetrieb aufrechterhalten wird, bei welchem das Strahlungsrohr den Raum auf eine Mindesttemperatur erwärmt. Bei einem Spitzenlastbetrieb, bei welchem eine kurzzeitig auftretende hohe Leistung in Form einer hohen Raumtemperatur gefordert ist, wird dann der Brenner in Betrieb genommen, um das Strahlungsrohr auf eine Temperatur zu erwärmen, die über der der Grundlast liegt.

In Ausgestaltung der Erfindung ist zur Optimierung des Verbrennungsprozesses weiter vorgesehen, dass im Betrieb des Brenners das Heizmedium zumindest einen Teil der für eine Verbrennung durch den Brenner benötigten und mit einem Brennmedium gemischten Verbrennungsluft bildet. Vorzugsweise wird als Brennmedium Erdgas verwendet. Denkbar ist es auch, dass das Heizmedium getrennt von Verbrennungsluft in das Strahlungsrohr gefördert wird, wobei dann eine zusätzliche Leitung zur Förderung von Verbrennungsluft erforderlich ist.

Eine Möglichkeit einer besonders kompakten Bauweise lässt sich in Ausgestaltung der Erfindung dadurch realisieren, dass der Brennraum des Brenners durch die Wandung des Strahlungsrohres ausgebildet ist. Es muss also kein zusätzliches Bauteil zur Realisierung des Brennraumes vorgesehen werden.

In Weiterbildung des erfindungsgemäßen Verfahrens ist vorgesehen, dass das Heizmedium in der Förderleitung stromauf des Strahlungsrohres mit Hilfe zumindest eines Wärmetauschers erhitzt wird, und wobei zur indirekten Erhitzung des Heizmediums der Wärmetauscher von der Solaranlage angetrieben wird. Dabei kann die Solaranlage entweder Wärme oder Strom zum Betrieb des Wärmetauschers liefern.

In Ausgestaltung des Verfahrens sieht die Erfindung weiterhin vor, dass das Heizmedium direkt innerhalb der Solaranlage oder im zumindest einen Wärmetauscher mit Hilfe eines von der Solaranlage erhitzten Heizfluides auf eine Temperatur von mindestens 250°C erhitzt wird. Wie vorstehend erwähnt, kann als Heizfluid beispielsweise ein Thermal-Öl verwendet werden, welches einen Dauerbetrieb der Vorrichtung ermöglicht, wobei das Thermal-Öl beispielsweise auf mindestens 300°C erhitzt werden kann, so dass eine ausreichende Erwärmung des Heizmediums möglich ist. Für einen Dauerbetrieb ist es von besonderem Vorteil, wenn dann das Heizfluid zwischen dem zumindest einen Wärmetauscher und der Solaranlage in einer Kreislaufleitung gefördert wird, wobei der Wärmeaustausch zwischen dem Heizmedium und dem Heizfluid auf indirekte Weise erfolgt.

Alternativ zu dieser Verfahrensführung ist vorgesehen, dass das Heizmedium von dem zumindest einen Wärmetauscher erhitzt wird, der mit Hilfe von elektrischer Energie, die von der Solaranlage erzeugt wird, betrieben wird. Damit ist das Beheizen eines Raumes sowohl mittels thermischer als auch mittels elektrisch gewonnener Energie möglich.

Von besonderem Vorteil ist es, wenn ein an einem Längsende des Strahlungsrohres angeordneter Brenner, der einen in das Strahlungsrohr mündenden Brennraum aufweist, nur dann in Betrieb genommen wird, wenn von dem Heizmedium, das mit Hilfe der Solaranlage direkt oder indirekt erhitzt wird, eine vorgegebene Heizleistung durch Wärmeabstrahlung des Strahlungsrohres nicht erreicht wird. Sollte demnach beispielsweise die aus der Sonneneinstrahlung gewonnene und von der Solaranlage an den Wärmetauscher gelieferte Energie nicht zur Deckung einer Grundlast ausreichen, so kann erfindungsgemäß der Brenner zur Deckung dieser oder einer darüber hinausgehenden Last nach Art eines Hybridsystems eingesetzt werden.

Für einen Grundlastbetrieb der Anordnung wird allein das mittels Wärmetauscher vorerhitzte Heizmedium zur Erwärmung bzw. Erhitzung der Wandung des Strahlungsrohres eingesetzt. Darüber hinaus bzw. alternativ ist es von Vorteil, wenn im Betrieb des Brenners von dem Heizmedium zumindest ein Teil der für eine Verbrennung durch den Brenner benötigten und mit einem Brennmedium gemischten Verbrennungsluft gebildet wird. Dadurch ist eine separate Verbrennungsluftzufuhr zu dem Brenner entbehrlich, aber auch denkbar.

Im Hinblick auf eine effiziente Verbrennung ist es bei dem erfindungsgemäßen Verfahren schließlich von Vorteil, wenn im Betrieb des Brenners von dem Heizmedium ein Teil der Verbrennungsluft gebildet wird, und wobei das Heizmedium direkt oder indirekt von und innerhalb der Solaranlage oder indirekt von dem von der Solaranlage angetriebenen Wärmetauscher zur Anhebung der Verbrennungslufttemperatur vorerwärmt wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 eine erfindungsgemäße Anordnung zum Beheizen eines Raumes gemäß einer ersten Ausführungsform in exemplarischer und schematischer Darstellung und
Figur 2 eine erfindungsgemäße Anordnung zum Beheizen eines Raumes gemäß einer zweiten Ausführungsform in exemplarischer und schematischer Darstellung und
Figur 3 eine erfindungsgemäße Anordnung zum Beheizen eines Raumes gemäß einer dritten Ausführungsform in exemplarischer und schematischer Darstellung.

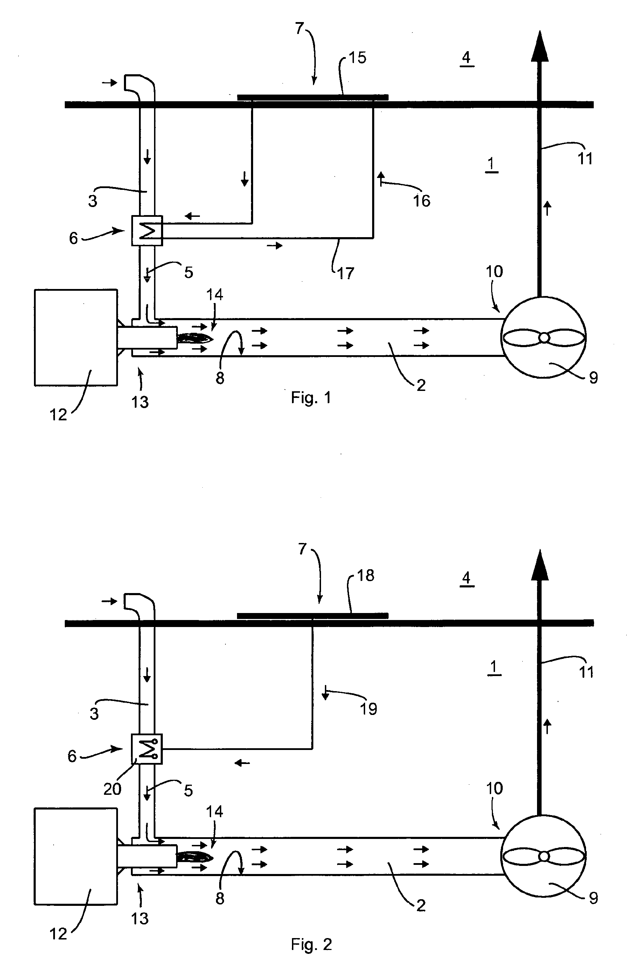

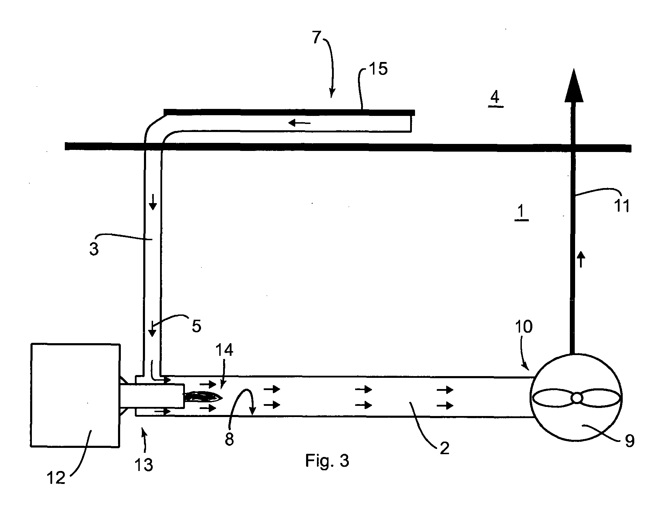

Die Figuren 1 bis 3 zeigen unterschiedliche Anordnungen zum Beheizen eines Raumes, wobei sich die Figuren 1 und 2 auf Anordnungen beziehen, bei denen Sonnen- bzw. Solarenergie zur indirekten Erhitzung eines Heizmediums genutzt wird. Demgegenüber ist in Figur 3 eine Anordnung zum Beheizen eines Raumes dargestellt, bei der Sonnen- bzw. Solarenergie zur direkten Erhitzung eines Heizmediums genutzt wird.

Die in der Figur 1 bzw. 2 in schematischer Darstellung gezeigte Anordnung zum Beheizen eines großen hallenähnlichen Raumes 1 weist ein Strahlungsrohr 2 auf, das in dem zu beheizenden Raum 1 zur Wärmeabstrahlung angeordnet ist. Vorzugsweise ist das Strahlungsrohr 2 kurz unterhalb einer Decke des Raumes 1 befestigt und strahlt Wärme nach unten in Richtung des Bodens des Raumes 1 ab. Das Strahlungsrohr 2 steht mit einer Förderleitung 3 in Strömungsverbindung. Die Förderleitung 3 saugt Luft von außerhalb des Raumes 1 bzw. aus dem Freien 4 an. Die angesaugte Luft dient als Heizmedium 5, welches mit Hilfe eines Wärmetauschers 6, der stromauf des Strahlungsrohres 2 in der Förderleitung 3 angeordnet ist, vor Eintritt in das Strahlungsrohr 2 erwärmt wird. Der zur Erhitzung des Heizmediums 5 verwendete Wärmetauscher 6 steht mit einer Solaranlage 7 in Wirkverbindung. Die Solaranlage 7 ist zur Aufnahme von Sonnenstrahlung außerhalb des zu beheizenden Raumes 1 im Freien 4 angeordnet und befindet sich vorzugsweise auf dem Dach eines Gebäudes. Die vorstehend beschriebene Anordnung zum Beheizen des Raumes 1, wie beispielsweise einer Halle, umfasst somit ein zur Wärmeabstrahlung dienendes und in dem zu beheizenden Raum 1 angeordnetes Strahlungsrohr 2, und eine zu dem Strahlungsrohr 2 führende Förderleitung 3, die das Heizmedium 5 zu und in das Strahlungsrohr 2 leitet. Die Erhitzung bzw. Erwärmung des Heizmediums 5 erfolgt mittels des in der Förderleitung 3 angeordneten Wärmetauschers 6, der von der im Freien 4 aufgestellten Solaranlage 7 mit Energie versorgt und angetrieben wird. Dementsprechend wird das Heizmedium 5 von der Solaranlage 7 indirekt erhitzt. Das stromauf des Strahlungsrohres 2 im Wärmetauscher 6 erhitze Heizmedium 5 gelangt in das Strahlungsrohr 2 und erwärmt bei Durchströmung des Strahlungsrohres 2 dessen Wandung 8. Die erwärmte Wandung 8 des Strahlungsrohres 2 gibt dann Wärme in Form von Strahlung an den zu beheizenden Raum 1 ab. Ein Sauggebläse 9, das an einem Längsende 10 des Strahlungsrohres 2 angeordnet ist, erzeugt im Strahlungsrohr 2 zum Transport des Heizmediums 5 einen Unterdruck. Nach dem Austritt des Heizmediums 5 aus dem Strahlungsrohr 2 wird das Heizmedium 5 über eine Abgasleitung 11 aus dem Raum 1 ins Freie 4 abgeleitet.

Die in der Figur 1 bzw. 2 dargestellte Anordnung zum Beheizen des Raumes 1 kann ferner einen Brenner 12 umfassen, der an einem dem Sauggebläse 9 abgewandten Längsende 13 des Strahlungsrohres 2 angeordnet ist. Der Brenner 12 weist einen in das Strahlungsrohr 2 mündenden Brennraum 14 auf, der von der Wandung 8 des Strahlungsrohres 2 ausgebildet sein kann. Das Vorsehen des Brenners 12 sowie eine Inbetriebnahme des Brenners 12 ist rein optional, aber zweckdienlich für den Fall, dass die Intensität der Sonnenstrahlung, die von der Solaranlage erfasst wird, nicht ausreichend ist, um den Wärmetauscher 6 anzutreiben und damit das Heizmedium 5 auf eine erforderliche Temperatur zur Erhitzung des Strahlungsrohres 2 zu erwärmen. Die Wandung 8 des Strahlungsrohrs 2 wird zur Wärmeabstrahlung von dem durch den Wärmetauscher 6 erhitzten Heizmedium 5 erwärmt. Der Brenner 12 ist nur dann in Betrieb, wenn die Heizleistung des Strahlungsrohres 2 durch alleinige Erwärmung des erhitzten Heizmediums 5 eine vorgegebene Heizleistung nicht erreicht. Üblicherweise reicht die Heizleistung des Heizmediums 5 zur Deckung einer Grundlast aus, wobei zur Deckung von Spitzenlasten oder bei zu geringer oder nicht vorhandener Solarenergie, wodurch keine Erwärmung des Heizmediums 5 im Wärmetauscher 6 erfolgt, der Brenner 12 in Betrieb genommen wird. Alternativ oder optional kann das Heizmedium 5 nicht nur zur Grundlastdeckung verwendet werden, sondern im Betrieb des Brenners 12 zumindest einen Teil der für eine Verbrennung von dem Brenner 12 benötigten und mit einem Brennmedium gemischten Verbrennungsluft bilden. Durch den Brenner 12 und das Strahlungsrohr 2 wird eine geschlossene Verbrennung realisiert, was eine kontrollierte Abführung der Abgase über die Abgasleitung 11 ermöglicht. Der Brenner 12 wird dann in Betrieb genommen, wenn die Solarstrahlung nicht mit der erforderlichen Intensität einfällt oder ganz ausbleibt, wie beispielsweise in der Nacht. Auch erfolgt eine Aktivierung des Brenners 12 nur in dem Maße, in dem über die einfallende Solarstrahlung hinaus noch ein Energiebedarf gefordert ist.

Die vorstehend aufgeführten Merkmale der Anordnung gemäß der Erfindung sind für beide in den Figuren 1 und 2 gezeigten Ausführungsformen identisch. Unterschiede bestehen zwischen den Ausführungen in der Ausgestaltung der Solaranlage 7 und folglich in der Ausgestaltung des Wärmetauschers 6, wobei bei diesen Ausführungsformen die Solarenergie indirekt zur Beheizung des Heizmediums 5 genutzt wird.

Bei der in Figur 1 schematisch dargestellten Solaranlage 7 handelt es sich um eine thermische Solaranlage 15. Von der thermischen Solaranlage 15 wird durch Sonneneinstrahlung ein Heizfluid 16 erhitzt, welches in einer Kreislaufleitung 17 zu dem Wärmetauscher 6 gefördert wird und im Wärmetauscher 6 einen Wärmetausch mit dem durch die Förderleitung 3 strömenden Heizmedium 5 eingeht, wodurch das Heizmedium 5 aufgeheizt bzw. erhitzt wird. Nach dem Wärmetausch im Wärmetauscher 6 wird das Heizfluid 16 über die mit der thermischen Solaranlage 15 in Strömungsverbindung stehende Kreislaufleitung 17 zurückbefördert und von der thermischen Solaranlage 15 erneut erwärmt bzw. erhitzt. Das Heizfluid 16 ist vorzugsweise ein Thermal-Öl, welches für einen Dauerbetrieb der Anordnung besonders geeignet ist.

Demgegenüber ist in Figur 2 eine Solaranlage 7 nach Art einer Photovoltaikanlage 18 mit Solarzellen gezeigt. Durch Sonneneinstrahlung auf die Solaranlage 7 erzeugt die Photovoltaikanlage 18 elektrische Energie 19, die dem Wärmetauscher 6 zur Verfügung gestellt wird. Der Wärmetauscher 6 ist bei diesem Ausführungsbeispiel als elektrisch betriebenes Heizregister 20 ausgeführt, das mit Hilfe der von der Photovoltaikanlage 18 bereitgestellten, elektrischen Energie 19 betrieben bzw. versorgt wird.

Demnach unterscheiden sich die in den Figuren 1 und 2 dargestellten Ausführungsformen der erfindungsgemäßen Anordnung in den technischen Merkmalen des Wärmetauschers 6 und der Solaranlage 7, wobei die Ausgestaltung des Wärmetauschers 6 primär von der Ausführungsart der Solaranlage 7 und der von der Solaranlage 7 gewonnenen Energieform ist.

In Figur 3 ist eine dritte Ausführungsform einer Anordnung zum Beheizen eines Raumes dargestellt. Die gezeigte Anordnung unterscheidet sich von den in den Figuren 1 und 2 dargestellten Anordnungen dadurch, dass zur Erhitzung des Heizmediums 5 kein Wärmetauscher 6 vorgesehen ist, sondern stattdessen das Heizmedium 5 von und innerhalb der Solaranlage 7 direkt erhitzt wird. Dabei ist in dem dargestellten Ausführungsbeispiel die Solaranlage 7 als thermische Solaranlage 15, beispielsweise als Parabolrinne, ausgebildet, bei der Luft als das Heizmedium 5 aus der Umgebung bzw. aus dem Freien 4 in einer Absorberröhre mit Hilfe von Reflektoren direkt erhitzt wird und anschließend über die Förderleitung 3 zu dem in dem Raum 1 angeordneten Strahlungsrohr 2 befördert wird, wo das Heizmedium 5 dann die Wandung 8 des Strahlungsrohres 2 zur Beheizung des Raumes 1 erwärmt. Alternativ kann das Heizmedium 5 auch zwischen der Solaranlage 7 und dem Strahlungsrohr 2 mittels eines entsprechenden Leitungssystems im Kreislauf befördert und immer wieder von der Solaranlage 7 direkt erhitzt werden. Mit Ausnahme des Fehlens des Wärmetauschers 6 weist die Anordnung in Figur 3 die gleichen konstruktiven Merkmale wie die in den Figuren 1 und 2 gezeigten Anordnungen auf, weshalb aus Gründen einer Wiederholung auf eine detaillierte Beschreibung verzichtet wird und auf die Ausführungen zu den Figuren 1 und 2 verwiesen sei. Nachstehend wird das erfindungsgemäße Verfahren beschrieben. Wie eingangs angemerkt, dient das Strahlungsrohr 2 zum Beheizen des Raumes 1. Bei dem Verfahren wird das zur Erwärmung der Wandung 8 des Strahlungsrohres 2 dienende und gasförmige Heizmedium 5 beispielsweise aus dem Freien 4 angesaugt und über die Förderleitung 3 zu dem Strahlungsrohr 2 gefördert. Dabei wird das Heizmedium 5 mit Hilfe der außerhalb des Raumes 1 im Freien 4 angeordneten und Sonnen- bzw. Solarenergie umwandelnden Solaranlage 7 direkt oder indirekt erhitzt.

Bei der direkten Erhitzung wird das Heizmedium direkt von und innerhalb der Solaranlage 7 erhitzt, wohingegen bei indirekter Erhitzung des Heizmediums die Solaranlage 7 mit dem Wärmetauscher 6 in Wirkverbindung steht und diesen antreibt, d.h. die Solarenergie wird indirekt zur Erhitzung des Heizmediums 5 genutzt.

Bei der indirekten Erhitzung ist stromauf des Strahlungsrohres 2 in der Förderleitung 3 der Wärmetauscher 6 angeordnet, der zur Erwärmung bzw. Erhitzung des Heizmediums 5 vor dessen Eintritt in das Strahlungsrohr 2 dient. Bei den Ausführungsformen der Figuren 1 und 2 ist vorgesehen, dass der Wärmetauscher 6 von der außerhalb des Raumes 1 im Freien 4 angeordneten Solaranlage 7 angetrieben bzw. mit entsprechender Energie zur Erhitzung des Heizmediums 5 versorgt wird.

Dabei kann entweder das Heizmedium 5 im Wärmetauscher 6 mit Hilfe eines von der Solaranlage 7 erhitzten Heizfluides 16 - entsprechend des in Figur 1 dargestellten Ausführungsbeispiels - auf eine Temperatur von mindestens 250°C erhitzt werden. Hierbei wird dann das Heizfluid 16 zwischen dem Wärmetauscher 6 und der Solaranlage 7 in der Kreislaufleitung 17 gefördert.

Alternativ hierzu kann das Heizmedium 5 von dem Wärmetauscher 6 entsprechend des in Figur 2 dargestellten Ausführungsbeispiels erhitzt werden, wobei der Wärmetauscher 6 mit Hilfe von elektrischer Energie 19, die von der Solaranlage 7 erzeugt wird, betrieben wird.

Der an dem Längsende 13 des Strahlungsrohres 2 angeordneter Brenner 12 wird nur dann in Betrieb genommen, wenn von dem Heizmedium 5 eine vorgegebene Heizleistung durch Wärmeabstrahlung des Strahlungsrohres 2 nicht erreicht wird, d.h. der Brenner 12 wird nur dann in Betrieb genommen, wenn die von der Solaranlage 7 genutzte und/oder umgewandelte Solarenergie nicht ausreicht, das Heizmedium 5 auf die benötigte Temperatur zu erhitzen. Sollte dementsprechend das Heizmedium 5 die Wandung 8 des Strahlungsrohres 2 nicht ausreichend zur Deckung einer vorgegebenen Heizleistung erwärmen, was entweder auf einen erhöhten Leistungsbedarf oder aber auf fehlende oder zu geringe Sonnenstrahlung zur Erhitzung des Heizmediums 5 hindeutet, so würde der Brenner eingeschaltet und die Verbrennung des Brenners bzw. die bei der Verbrennung entstehenden Abgase für die benötige Erwärmung der Wandung 8 des Strahlungsrohres 2 sorgen. In diesem Fall, also im Betrieb des Brenners 12, wird dann von dem Heizmedium 5 zumindest ein Teil der für die Verbrennung durch den Brenner 12 benötigten und mit einem Brennmedium gemischten Verbrennungsluft gebildet. Dabei ist es aus verbrennungstechnischer Sicht zusätzlich von Vorteil, wenn das Heizmedium 5 von dem Wärmetauscher 6 zur Anhebung der Verbrennungslufttemperatur vorerwärmt wird.

Denkbar ist auch, dass der Brenner 12 die für die Verbrennung erforderliche Verbrennungsluft nicht aus dem Heizmedium 5, sondern aus einer anderen Quelle bezieht. Hierzu müsste dann eine separate Versorgungsleitung zum Brenner 12 vorgesehen sein, die den Brenner 12 zusätzlich zu einem Verbrennungsgas mit ausreichend Verbrennungsluft versorgt.

Zusammenfassend wird erfindungsgemäß die Wärmestrahlung des Strahlungsrohres 2 auf hybride Weise, also durch Kombination von zwei Technologien, erzeugt. Das Hybridsystem zum Beheizen eines Raumes 1 macht hierbei von den Technologien eines Dunkelstrahlers und der Solarenergie Gebrauch und vereinigt beide Technologien in einer Anordnung. Auf diese Weise wird durch die Erfindung ein solarbetriebener Dunkelstrahler bereitgestellt, der bei nicht ausreichend vorhandener Solarenergie auf bekannte Weise mittels Einsatzes eines Brenners 12 betrieben werden kann. Dadurch, dass der Brenner 12 zur Deckung von Grund- und Spitzenlastzuständen eingesetzt werden kann, befindet sich die als Strahlungsrohr 2 ausgebildete Heizungsvorrichtung jederzeit im Lastbereich. Das Strahlungsrohr 2 wird somit mittels Solarenergie erhitzt, wobei der Brenner 12 bei Ausbleiben oder unzureichender Heizleistung des Strahlungsrohres 2 den Energieeintrag ins Strahlungsrohr 2 übernehmen oder ausgleichen und damit die Heizleistung erhöhen kann.

Die Erfindung nutzt Sonnenstrahlung im Rahmen des vorstehend beschriebenen Hybridsystems. Dabei können Heizregister bzw. Wärmetauscher 6 zur Erzeugung und/oder Aufrechterhaltung der Strahlungsrohrtemperatur - oder zur Erreichung einer Grundlast - mit für einen Hochtemperatureinsatz geeigneten Medien zum Einsatz kommen. Hierzu kommt beispielsweise Thermal-Öl in Betracht, welches das durch den Wärmetauscher 6 strömende Heizmedium 5 erhitzt. Alternativ kann das Heizregister bzw. der Wärmetauscher 6 elektrisch betrieben werden. Spitzenlasten werden hierbei von dem mit Gas betriebenen Brenner 12 abgedeckt, so dass der Brenner 12 als eine Art Regeleinheit dient. Heizregister bzw. Wärmetauscher 6 können aber auch zur Vorwärmung des dann als Verbrennungsluft dienenden Heizmediums 5 zur Verbesserung der Verbrennung eingesetzt werden, wobei ein Einsatz der Heizregister auch als Zusatzleistung für einen Spitzenbedarf in Frage kommt.

Die vorstehend beschriebene Erfindung ist selbstverständlich nicht auf die beschriebenen und dargestellten Ausführungsformen beschränkt. Beispielsweise kann statt eines rohrförmigen ein U-förmiges Strahlungsrohr 2 verwendet werden. Auch ist es denkbar, mehrere Wärmetauscher zur Erhitzung des Heizmediums beispielsweise in der Förderleitung stromauf des Strahlungsrohres vorzusehen, wobei die Wärmetauscher entweder von einer thermischen Solaranlage oder einer Photovoltaikanlage oder einer Kombination aus beidem betrieben werden können. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in den Ansprüchen definiert ist.

## Patentansprüche

1. Anordnung, aufweisend einen zu beheizenden Raum (1), eine Solaranlage (7) und ein zur Wärmeabstrahlung dienendes und in dem Raum (1) angeordnetes Strahlungsrohr (2), wobei die Anordnung zum Beheizen des Raumes (1) ausgebildet ist und ferner eine in dem Raum (1) zu dem Strahlungsrohr (2) verlaufende Förderleitung (3) aufweist, die ein die Wandung (8) des Strahlungsrohres (2) erwärmendes Heizmedium (5) in das Strahlungsrohr (2) fördert, wobei die außerhalb des Raumes (1) im Freien (4) angeordnete Solaranlage (7) das die Wandung (8) des Strahlungsrohres (2) erwärmende Heizmedium (5) direkt oder indirekt erhitzt,
**dadurch gekennzeichnet,**
**dass** ein Brenner (12) an einem Längsende (13) des Strahlungsrohres (2) angeordnet ist, der einen in das Strahlungsrohr (2) mündenden Brennraum (14) aufweist.

2. Anordnung nach Anspruch 1, wobei die Solaranlage (7) zumindest eine thermische Solaranlage (15) umfasst und das von und innerhalb der zumindest einen thermischen Solaranlage (15) direkt erhitzte Heizmedium (5) über die Förderleitung (3) in das Strahlungsrohr (2) gelangt.

3. Anordnung nach Anspruch 1, wobei in der Förderleitung (3) stromauf des Strahlungsrohres (2) zumindest ein das Heizmedium (5) erhitzender Wärmetauscher (6) angeordnet ist, der mit der außerhalb des Raumes (1) im Freien (4) angeordneten und den zumindest einen Wärmetauscher (6) zur Erhitzung des Heizmediums (5) antreibenden Solaranlage (7) in Wirkverbindung steht.

4. Anordnung nach Anspruch 3, wobei die Solaranlage (7) zumindest eine thermische Solaranlage (15) ist, die ein Heizfluid (16) aufheizt, welches wiederum zur Aufheizung des durch den zumindest einen Wärmetauscher (6) strömenden Heizmediums (5) dient.

5. Anordnung nach Anspruch 3, wobei der zumindest eine Wärmetauscher (6) ein elektrisch betriebenes Heizregister (20) ist und die Solaranlage (7) zumindest eine Photovoltaikanlage (18) ist, die das elektrisch betriebene Heizregister (20) zur indirekten Erhitzung des Heizmediums (5) mit elektrischer Energie (19) versorgt.

6. Verfahren zum Beheizen eines Raumes (1), bei dem ein Heizmedium (5) zur Erwärmung einer Wandung (8) eines in dem zu beheizenden Raum (1) angeordneten Strahlungsrohres (2) zu diesem und durch dieses hindurch gefordert wird, wobei das Heizmedium (5) über eine in dem Raum (1) verlaufende Förderleitung (3) zu dem Strahlungsrohr (2) gefördert wird, und wobei das Heizmedium (5) mit Hilfe einer außerhalb des Raumes (1) im Freien (4) angeordneten Solaranlage (7) direkt oder indirekt erhitzt wird,
**dadurch gekennzeichnet,**
**dass** ein an einem Längsende (13) des Strahlungsrohres (2) angeordneter Brenner (12), der einen in das Strahlungsrohr (2) mündenden Brennraum (14) aufweist, nur dann in Betrieb genommen wird, wenn von dem Heizmedium (5), das mit Hilfe der Solaranlage (7) direkt oder indirekt erhitzt wird, eine vorgegebene Heizleistung durch Wärmeabstrahlung des Strahlungsrohres (2) nicht erreicht wird.

7. Verfahren nach Anspruch 6, wobei das Heizmedium (5) in der Förderleitung (3) stromauf des Strahlungsrohres (2) mit Hilfe zumindest eines Wärmetauschers (6) erhitzt wird, und wobei zur indirekten Erhitzung des Heizmediums (5) der Wärmetauscher (6) von der Solaranlage (7) angetrieben wird.

8. Verfahren nach Anspruch 6 oder 7, wobei das Heizmedium (5) direkt innerhalb der Solaranlage (7) oder im zumindest einen Wärmetauscher (2) mit Hilfe eines von der Solaranlage (7) erhitzten Heizfluides (16) auf eine Temperatur von mindestens 250°C erhitzt wird.

9. Verfahren nach Anspruch 8, wobei das Heizfluid (16) zwischen dem zumindest einen Wärmetauscher (6) und der Solaranlage (7) in einer Kreislaufleitung (17) gefördert wird.

10. Verfahren nach Anspruch 7, wobei das Heizmedium (5) von dem zumindest einen Wärmetauscher (6) erhitzt wird, der mit Hilfe von elektrischer Energie, die von der Solaranlage (7) erzeugt wird, betrieben wird.

11. Verfahren nach Anspruch 6, wobei im Betrieb des Brenners (12) von dem Heizmedium (5) zumindest ein Teil der für eine Verbrennung durch den Brenner (12) benötigten und mit einem Brennmedium gemischten Verbrennungsluft gebildet wird.

12. Verfahren nach Anspruch 11, wobei im Betrieb des Brenners (12) von dem Heizmedium (5) ein Teil der Verbrennungsluft gebildet wird, und wobei das Heizmedium (5) direkt von und innerhalb der Solaranlage (7) oder indirekt von dem von der Solaranlage (7) angetriebenen Wärmetauscher (6) zur Anhebung der Verbrennungslufttemperatur vorerwärmt wird.

## Claims

1. An arrangement featuring a room (1) to be heated, a solar system (7) and a radiation tube (2) that is arranged in the room (1) and serves for radiating heat, wherein the arrangement is designed for heating the room (1) and furthermore features conveyor pipe (3) that extends in the room (1) to the radiation tube (2) and conveys a heating medium (5) into the radiation tube (2) in order to heat the wall (8) of the radiation tube (2), and wherein the solar system (7) that is arranged outside the room (1) and outdoors (4) directly or indirectly heats the heating medium (5) heating the wall (8) of the radiation tube (2),
**characterized in**
**that** a burner (12) is arranged on one longitudinal end (13) of the radiation tube (2) and features a combustion chamber (14) that leads into the radiation tube (2).

2. The arrangement according to Claim 1, wherein the solar system (7) comprises at least one thermal solar system (15) and the heating medium (5) that is directly heated by and within the at least one thermal solar system (15) reaches the radiation tube (2) via the conveyor pipe (3).

3. The arrangement according to Claim 1, wherein at least one heat exchanger (6) for heating the heating medium (5) is arranged in the conveyor pipe (3) upstream of the radiation tube (2) and functionally connected to the solar system (7) that is arranged outside the room (1) and outdoors (4) and drives the at least one heat exchanger (6) for heating the heating medium (5).

4. The arrangement according to Claim 3, wherein the solar system (7) consists of at least one thermal solar system (15) that heats a heating fluid (16), and wherein said heating fluid in turn serves for heating the heating medium (5) flowing through the at least one heat exchanger (6).

5. The arrangement according to Claim 3, wherein the at least one heat exchanger (6) consists of an electrically operated damper register (20) and the solar system (7) consists of at least one photovoltaic system (18) that supplies the electrically operated damper register (20) for indirectly heating the heating medium (5) with electric energy (19).

6. A method for heating a room (1), in which a heating medium (5) is conveyed to and through a radiation tube (2) arranged in the room (1) to be heated in order to heat a wall (8) of said radiation tube, wherein the heating medium (5) is conveyed to the radiation tube (2) through a conveyor pipe (3) that extends in the room (1), and wherein the heating medium (5) is directly or indirectly heated with the aid of a solar system (7) that is arranged outside the room (1) and outdoors (4),
**characterized in**
**that** a burner (12) with a combustion chamber (14) leading into the radiation tube (2) is arranged on one longitudinal end (13) of the radiation tube (2) and only put into operation when the heating medium (5) that is directly or indirectly heated with the aid of the solar system (7) does not reach a predetermined heating capacity due to the heat radiation of the radiation tube (2).

7. The method according to Claim 6, wherein the heating medium (5) is heated in the conveyor pipe (3) upstream of the radiation tube (2) with the aid of at least one heat exchanger (6), and wherein the heat exchanger (6) is driven by the solar system (7) in order to indirectly heat the heating medium (5).

8. The method according to Claim 6 or 7, wherein the heating medium (5) is heated to a temperature of at least 250°C directly within the solar system (7) or in at least one heat exchanger (2) with the aid of a heating fluid (16) that is heated by means of the solar system (7).

9. The method according to Claim 8, wherein the heating fluid (16) is conveyed between the at least one heat exchanger (6) and the solar system (7) in a circulation pipe (17).

10. The method according to Claim 7, wherein the heating medium (5) is heated by the at least one heat exchanger (6) that is driven with the aid of electric energy generated by the solar system (7).

11. The method according to Claim 6, wherein at least part of the combustion air that is required for a combustion by means of the burner (12) and mixed with a fuel medium is formed by the heating medium (5) during the operation of the burner (12).

12. The method according to Claim 11, wherein part of the combustion air is formed by the heating medium (5) during the operation of the burner (12), and wherein the heating medium (5) is preheated directly by and within the solar system (7) or indirectly by the heat exchanger (6) that is driven by the solar system (7) in order to raise the combustion air temperature.

## Revendications

1. Agencement, présentant une pièce (1) à chauffer, une installation solaire (7) et un conduit de rayonnement (2) servant au rayonnement calorifique et disposé dans la pièce (1), l'agencement pour chauffage de la pièce (1) étant constitué et présentant en outre une conduite de transport (3) passant dans la pièce (1) vers le conduit de rayonnement (2), qui transporte un milieu calorifique (5) réchauffant la paroi (8) du conduit de rayonnement (2), l'installation solaire (7) disposée à l'extérieur de la pièce (1) à l'air libre (4) chauffant directement ou indirectement le milieu calorifique (5) réchauffant la paroi (8) du conduit de rayonnement (2) **caractérisé en ce qu'**un brûleur (12) est disposé à une extrémité longitudinale (13) du conduit de rayonnement (2) qui présente un compartiment de combustion (14) débouchant dans le conduit de rayonnement (2).

2. Agencement selon la revendication 1 pour lequel l'installation solaire (7) comprend au moins une installation solaire thermique (15) et le milieu calorifique (5) directement chauffé par et à l'intérieur d'au moins une installation solaire thermique (15) parvient par la conduite de transport (3) dans le conduit de rayonnement (2).

3. Agencement selon la revendication 1 pour lequel au moins un échangeur thermique (6) chauffant le milieu calorifique (5) est disposé dans la conduite de transport (3) en amont du conduit de rayonnement (2) qui est en relation active avec l'installation solaire (7) disposée à l'extérieur de la pièce (1) à l'air libre (4) et entraînant le au moins un échangeur thermique (6) pour le chauffage du milieu calorifique (5).

4. Agencement selon la revendication 3, pour lequel l'installation solaire (7) est au moins une installation solaire thermique (15) qui réchauffe un thermofluide (16) qui sert de nouveau au chauffage du milieu calorifique (5) s'écoulant à travers le au moins un échangeur thermique (6).

5. Agencement selon la revendication 3, pour lequel au moins un échangeur thermique (6) est un registre de chauffage (20) actionné électriquement et l'installation solaire (7) est au moins une installation photovoltaïque (18), qui alimente le registre de chauffage (20) actionné électriquement pour chauffer indirectement le milieu calorifique (5) avec de l'énergie électrique (19).

6. Procédé pour le chauffage d'une pièce (1) pour lequel un milieu calorifique (5) pour chauffer une paroi (8) d'un conduit de rayonnement (2) disposé dans la pièce (1) à chauffer est transporté vers et à travers celle-ci, le milieu calorifique (5) étant transporté vers le conduit de rayonnement (2) par une conduite de transport (3) passant dans la pièce (1) et le milieu calorifique (5) étant chauffé directement ou indirectement à l'aide d'une installation solaire (7) disposée à l'extérieur de la pièce (1) à l'air libre (4) **caractérisé en ce qu'**un brûleur (12) disposé à une extrémité longitudinale (13) du conduit de rayonnement (2) qui présente un compartiment de combustion (14) débouchant dans le conduit de rayonnement (2) n'est mis en service que si le milieu calorifique (5), chauffé directement ou indirectement à l'aide de l'installation solaire (7) ne permet pas d'atteindre une puissance camlorifique prédéfinie par le rayonnement thermique du conduit de rayonnement (2).

7. Procédé selon la revendication 6 pour lequel le milieu calorifique (5) dans la conduite de transport (3) en amont du conduit de rayonnement (2) est chauffé à l'aide d'au moins un échangeur thermique (6) et pour lequel l'échangeur thermique (6) est actionné par l'installation solaire (7) pour le chauffage indirect du milieu calorifique (5).

8. Procédé selon la revendication 6 ou 7 pour lequel le milieu calorifique (5) est chauffé à une température d'au moins 250° C directement à l'intérieur d'une installation solaire (7) ou dans au moins un échangeur thermique (2) à l'aide d'un thermofluide (16) chauffé par l'installlation solaire (7).

9. Procédé selon la revendication 8 pour lequel le thermofluide (16) est transporté entre le au moins un échangeur thermique (6) et l'installation solaire (7) dans une conduite de circuit (17).

10. Procédé selon la revendication 7 pour lequel le milieu calorifique (5) est chauffé par au moins un échangeur thermique (6) qui est actionné à l'aide d'énergie électrique qui est produite par l'installation solaire (7).

11. Procédé selon la revendication 6 pour lequel dans le fonctionnement du brûleur (12) au moins une partie de l'air de combustion nécessaire pour une combustion par le brûleur (12) et mélangée avec un milieu de combustion est constituée par le milieu calorifique (5).

12. Procédé selon la revendication 11 pour lequel dans le fonctionnement du brûleur (12) une partie de l'air de combustion est constituée par le milieu calorifique (5) et pour lequel le milieu calorifique (5) est préchauffé directement par et à l'intérieur de l'installation solaire (7) ou indirectement par l'échangeur thermique (6) actionné par l'installation solaire (7) pour élever la température de l'air de combustion.
